Europäisches Patentamt

European Patent Office

Office européen des brevets

(19)

(11) **EP 1 149 851 B1**

(12) **EUROPÄISCHE PATENTSCHRIFT**

(45) Veröffentlichungstag und Bekanntmachung des Hinweises auf die Patenterteilung:
**21.09.2005 Patentblatt 2005/38**

(51) Int Cl.[7]: **C08G 18/66**, C08G 18/48

(21) Anmeldenummer: **01109308.5**

(22) Anmeldetag: **12.04.2001**

(54) **Aliphatische thermoplastische Polyurethane und ihre Verwendung**

Aliphatic thermoplastic polyurethane and its use

Polyuréthane thermoplastique aliphatique et son utilisation

(84) Benannte Vertragsstaaten:
**AT BE CH CY DE DK ES FI FR GB GR IE IT LI LU MC NL PT SE TR**

(30) Priorität: **25.04.2000 DE 10020163**

(43) Veröffentlichungstag der Anmeldung:
**31.10.2001 Patentblatt 2001/44**

(73) Patentinhaber: **Bayer MaterialScience AG**
**51368 Leverkusen (DE)**

(72) Erfinder:
• **Kaufhold, Wolfgang**
 **51061 Köln (DE)**
• **Peerlings, Henricus**
 **42699 Solingen (DE)**
• **Hoppe, Hans-Georg**
 **42799 Leichlingen (DE)**

(56) Entgegenhaltungen:
**EP-A- 0 922 719** **DE-A- 1 962 533**
**DE-A- 3 239 318** **DE-C- 19 812 160**

EP 1 149 851 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft aliphatische thermoplastische Polyurethane (TPU) aus Hexamethylendiisocyanat, Polytetramethylenglykol und Hexandiol mit verbesserten Eigenschaften.

Aromatische thermoplastische Polyurethane (aromatische TPU) sind aufgrund ihres Aufbaus aus aromatischen Diisocyanaten nicht lichtstabil. Bei Farbeinstellungen von Formkörpern entsteht durch Lichteinwirkung eine starke Vergilbung und selbst bei schwarzen Formkörpern kommt es zu einer Farb- und Glanzgradveränderung.

In DE-C 42 03 307 ist eine thermoplastisch in Form von Sinterpulver verarbeitbare Polyurethanformmasse zur Herstellung genarbter Sinterfolien beschrieben, wobei das Pulver ausschließlich aus linearen, aliphatischen Komponenten hergestellt wird. Die Polyolkomponente setzt sich zusammen aus 60 bis 80 Gewichtsteilen eines aliphatischen Polycarbonatdiols mit einem Molekulargewicht $\overline{M}_n$ von 2000 und 40 bis 20 Gewichtsteilen eines Polydiols auf Basis Adipinsäure, Hexandiol und Neopentylglykol mit einem Molekulargewicht $\overline{M}_n$ von 2000. 1,6-Hexamethylendiisocyanat in einem Äquivalenzverhältnis von 2,8:1,0 bis 4,2:1,0, bezogen auf das Polyolgemisch, und 1,4-Butandiol als Kettenverlängerungsmittel, wobei das Äquivalenzverhältnis des 1,4-Butandiols bezogen auf das Polydiol 1,3:1,0 bis 3,3:1,0 beträgt, werden bevorzugt eingesetzt.

Diese Formmasse hat den Nachteil (insbesondere für optisch anspruchsvolle Anwendungen), dass sie nach Lagerung (bei Raumtemperatur und besonders bei beschleunigtem Alterungstest, wie Klimawechseltest, Arizonatest und in der Wärme (60 - 95°C)) zu einer weißen Belagsbildung neigt. Die auftretende Belagsbildung hat den weiteren Nachteil, dass sie mit einem Tuch nicht einfach abwischbar ist.

Bei Verwendung von 1,6 Hexandiol als Kettenverlängerer wird die geschilderte Belagsbildung zwar reduziert, sie tritt jedoch bei Lagerung bei Raumtemperatur wieder auf. Allerdings kann diese Belagsbildung durch Abwischen mit einem Tuch entfernt werden.

Aufgabe der vorliegenden Erfindung war es daher, lichtstabile thermoplastische Polyurethane für hohe optische Anforderungen zur Verfügung zu stellen, die besonders nach Lagerung bei Raumtemperatur und nach beschleunigtem Alterungstest (z.B. nach Lagerung bei 60°C) Formkörper liefern, die nur sehr geringe oder keine Belagsbildung zeigen.

Diese Aufgabe konnte mit den erfindungsgemäßen thermoplastischen Polyurethanen gelöst werden.

Gegenstand der vorliegenden Erfindung sind aliphatische, thermoplastische Polyurethane erhältlich aus

A) 100 bis 60 Mol-%, bevorzugt 100 bis 70 Mol-%, besonders bevorzugt 100 bis 80 Mol-% Hexamethylendiisocyanat (HDI) und 0 bis 40 Mol-%, bevorzugt 0 bis 30 Mol-%, besonders bevorzugt 0 bis 20 Mol-% andere, von HDI verschiedene, aliphatische Diisocyanate,

B) 40 bis 100 Gew.-% Polytetramethylenglycol mit einem zahlenmittleren Molekulargewicht von 600 bis 1600 g/Mol und 0 bis 60 Gew.-% eines von Polytetramethylenglycol verschiedenen Polyols oder Polyolgemisches mit einem zahlenmittleren Molekulargewicht von 600 bis 5000 g/Mol und

C) 80 bis 100 Gew.-% 1,6-Hexandiol und 0 bis 20 Gew.-% von 1,6-Hexandiol verschiedenen Kettenverlängerers mit einem zahlenmittleren Molekulargewicht von 60 bis 500 g/Mol,
unter Zugabe von

D) gegebenenfalls Katalysatoren und

E) gegebenenfalls weiteren üblichen Hilfsmitteln und Zusatzstoffen,

wobei das Äquivalenzverhältnis von Diisocyanat A) zu Polyol B) zwischen 1,5:1,0 und 10,0:1,0 beträgt und wobei die NCO-Kennzahl (gebildet aus dem mit 100 multiplizierten Quotienten der Äquivalentverhältnisse von Isocyanatgruppen und der Summe der Hydroxylgruppen aus Polyol und Kettenverlängerungsmittel) 95 bis 105 beträgt.

Gegenstand der vorliegenden Erfindung sind weiterhin aliphatische thermoplastische Polyurethane erhältlich aus

A) 100 bis 60 Mol-%, bevorzugt 100 bis 70 Mol-%, besonders bevorzugt 100 bis 80 Mol-% Hexamethylendiisocyanat (HDI) und 0 bis 40 Mol-%, bevorzugt 0 bis 30 Mol-%, besonders bevorzugt 0 bis 20 Mol-% andere, von HDI verschiedene, aliphatische Diisocyanate,

B) 70 bis 30 Gew.-% eines von Polytetramethylenglykol verschiedenen Polyols oder Polyolgemisches mit einem zahlenmittleren Molekulargewicht von 600 bis 5000 g/Mol und 30-70 Gew.% Polytetramethylenglykol mit einem zahlenmittleren Molekulargewicht von 200-590 g/mol und

C) 80 bis 100 Gew.-% 1,6-Hexandiol und 0 bis 20 Gew.-% Kettenverlängerer mit einem zahlenmittleren Molekulargewicht von 60 bis 5 00 g/Mol, der verschieden von Polytetramethylenglykol mit einem zahlenmittleren Molekulargewicht von 200 bis 590 g/mol und verschieden von 1,6-Hexandiol ist,
unter Zugabe von

D) gegebenenfalls Katalysatoren und

E) gegebenenfalls üblichen Hilfsmitteln und Zusatzstoffen,

wobei das Äquivalenzverhältnis von Diisocyanat A) zu Polyol B) zwischen 1,5:1,0 und 10,0:1,0 beträgt und wobei die NCO-Kennzahl (gebildet aus dem mit 100 multiplizierten Quotienten der Äquivalentverhältnisse von Isocyanatgruppen und der Summe der Hydroxylgruppen aus Polyol und Kettenverlängerungsmittel) 95 bis 105 beträgt.

Die obige Reihenfolge der Komponenten A bis E sagt nichts über die Herstellungsweise der erfindungsgemäßen TPU aus. Die erfindungsgemäßen TPU können in verschiedenen Verfahrensvarianten hergestellt werden, wobei diese Varianten untereinander gleichwertig sind.

Die erfindungsgemäßen TPU auf Basis zweier unterschiedlicher aliphatischer Diisocyanate "A1" (HDI) und "A2" (aliphatisches, von HDI verschiedenes Diisocyanat) können beispielsweise in einem Reaktionsprozess zum TPU "A1-2" hergestellt werden. Man kann jedoch auch in bekannter Weise zunächst das TPU "A1" auf Basis des aliphatischen Diisocyanates "A1" und getrennt davon das TPU "A2" auf Basis des aliphatischen Diisocyanates "A2" herstellen, wobei die übrigen Komponenten B bis E identisch sind. Danach werden dann TPU "A1" und TPU "A2" in bekannter Weise im gewünschten Verhältnis zum TPU "A1-2" gemischt (z.B. mit Extrudern oder Knetern).

Die erfindungsgemäßen TPU auf Basis von Polyolgemischen können ebenfalls durch Einsatz von Polyolgemischen (Polyol B1 und Polyol B2) (z.B. in Mischaggregaten) in einem Reaktionsprozess zum TPU "B1-2" hergestellt werden. Zum anderen kann in bekannter Weise zunächst das TPU "B1" auf Basis von Polyol "B1" und getrennt davon das TPU "B2" auf Basis von Polyol "B2" hergestellt werden, wobei die restlichen Komponenten A und C bis E identisch sind. Danach werden dann TPU "B1" und "B2" in bekannter Weise im gewünschten Verhältnis zum TPU "B1-2" gemischt (z.B. mit Extrudern oder Knetern).

Je nach Anforderung an das Formteil, welches aus dem erfindungsgemäßen TPU hergestellt wird, kann das Hexamethylendiisocyanat (HDI) partiell gegen ein oder mehrere andere aliphatische Diisocyanate, insbesondere Isophorondiisocyanat (IPDI), 1,4-Cyclohexandiisocyanat, 1-Methyl-2,4-cyclohexandiisocyanat, 1-Methyl-2,6-cyclohexandiisocyanat und Isomerengemische davon, 4,4'-, 2,4'- und 2,2'-Dicyclohexylmethandiisocyanat und Isomerengemische davon ersetzt werden.

Bei Anwendungen mit geringeren Anforderungen an die Lichtstabilität, z.B. dunkel eingefärbten Formmassen können Teile (0 bis 20 Gew.%) des aliphatischen Diisocyanats sogar durch aromatische Diisocyanate ersetzt werden. Diese sind in Justus Liebigs Annalen der Chemie 562, S.75-136 beschrieben. Beispiele sind 2,4 Toluylendiisocyanat, Gemische aus 2,4- und 2,6 Toluylendiisocyanat, 4,4'-, 2,2'- und 2,4'-Diphenylmethandiisocyanat, Gemische aus 2,4- und 4,4'-Diphenylmethandiisocyanat, urethanmodifizierte, flüssige 2,4- und/oder 4,4'-Diphenylmethandiisocyanate, 4,4'-Diisocyanatodiphenylethan(1,2) und 1,5- Naphthylendiisocyanat.

Als Komponente B2) werden lineare hydroxylterminierte Polyole mit einem mittleren Molekulargewicht von 600 bis 5000 g/Mol, bevorzugt von 700 bis 4 200 g/Mol eingesetzt. Produktionsbedingt enthalten diese oft kleine Mengen an nichtlinearen Verbindungen. Häufig spricht man daher auch von "im wesentlichen linearen Polyolen".

Geeignete Polyesterdiole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyesterdiole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, wie Ethylenglykol, Diethylenglykol, 1,4-Butandiol, 1,5-Pentandiol, 1,6-Hexandiol, 1,10-Decandiol, 2,2-Dimethyl-1,3-propandiol, 1,3-Propandiol und Dipropylenglykol. Je nach den gewünschten Eigenschaften können die mehrwertigen Alkohole allein oder gegebenenfalls in Mischung untereinander verwendet werden. Geeignet sind ferner Ester der Kohlensäure mit den genannten Diolen, insbesondere solchen mit 4 bis 6 Kohlenstoffatomen, wie 1,4-Butandiol oder 1,6-Hexandiol, Kondensationsprodukte von Hydroxycarbonsäuren, beispielsweise Hydroxycapronsäure und Polymerisationsprodukte von Lactonen, beispielsweise gegebenenfalls substituierten Caprolactonen. Als Polyesterdiole vorzugsweise verwendet werden Ethandiol-polyadipate, 1,4-Butandiol-polyadipate, Ethandiol-1,4-butandiol-polyadipate, 1,6-Hexandiol-neopentylglykol-polyadipate, 1,6-Hexandiol-1,4-butandiol-polyadipate und Polycaprolactone. Die Polyesterdiole besitzen mittlere Molekulargewichte von 600 bis 5000, bevorzugt von 700 bis 4 200 und können einzeln oder in Form von Mischungen untereinander zur Anwendung kommen.

Geeignete Polyetherdiole können dadurch hergestellt werden, dass man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, Epichlorhydrin und 1,2-Butylenoxid und 2,3-Butylenoxid. Vorzugsweise werden Ethylenoxid, Propylenoxid und Mischungen aus 1,2-Propylenoxid und Ethylenoxid eingesetzt. Die Alkylenoxide können einzeln, alternierend nacheinander oder als Mischungen verwendet werden. Als Startermoleküle kommen beispielsweise in Betracht: Wasser, Aminoalkohole, wie N-Alkyl-diethanolamine, beispielsweise N-Methyl-diethanol-amin, und Diole, wie Ethylenglykol, 1,3-Propylenglykol, 1,4-Butandiol und 1,6-Hexandiol. Gegebenenfalls können auch Mischungen von Startermolekülen eingesetzt werden. Geeignete Polyetherdiole sind ferner die hydroxylgruppenhaltigen Polymerisationsprodukte des Tetrahydrofurans. Es können auch trifunktionelle Polyether in Anteilen von 0 bis 30 Gew.-%, bezogen auf die bifunktionellen Polyether, eingesetzt werden, jedoch höchstens in solcher Menge, dass ein thermoplastisch verarbeitbares Produkt entsteht. Die im wesentlichen linearen Polyetherdiole besitzen Molekulargewichte von 600 bis 5 000, bevorzugt von 700 bis 4 200. Sie können sowohl einzeln als auch in Form von Mischungen untereinander zur Anwendung kommen.

Als Kettenverlängerungsmittel C) wird 1,6-Hexandiol eingesetzt, gegebenenfalls in Abmischung mit bis zu 20 Gew.-% von 1,6-Hexandiol und von Polytetramethylenglykol mit einem zahlenmittleren Molekulargewicht von 200 bis 590 g/mol verschiedenen Kettenverlängerer mit einem zahlenmittleren Molekulargewicht von 60 bis 500 g/Mol, vorzugsweise aliphatische Diole mit 2 bis 14 Kohlenstoffatomen, wie z.B. Ethandiol, Diethylenglykol, Dipropylenglykol und insbesondere 1,4-Butandiol, oder (cyclo)aliphatische Diamine, wie z.B. Isophorondiamin, Ethylendiamin, 1,2-Propylendiamin, 1,3-Propylendiamin, N-Methyl-propylen-1,3-diamin, N,N'-Dimethylethylendiamin. Daneben können auch kleinere Mengen an Triolen zugesetzt werden.

Bei Anwendungen mit geringeren Anforderungen an die Lichtstabilität, z.B bei dunkel eingefärbten Formmassen, können Teile der aliphatischen Diole und Diamine (bis zu 20 Gew.% bezogen auf Kettenverlängerer) durch aromatische Diole und Diamine ersetzt werden. Beispiele für geeignete aromatische Diole sind Diester der Terephthalsäure mit Glykolen mit 2 bis 4 Kohlenstoffatomen, wie z.B. Terephthalsäure-bisethylenglykol oder Terephthalsäure-bis-1,4-butandiol, Hydroxyalkylenether des Hydrochinons, wie z.B. 1,4-Di(-hydroxyethyl)-hydrochinon, und ethoxylierte Bisphenole. Beispiele für geeignete aromatische Diamine sind. 2,4-Toluylen-diamin und 2,6-Toluylendiamin, 3,5-Diethyl-2,4-toluylendiamin und 3,5-Diethyl-2,6-toluylendiamin und primäre mono-, di-, tri- oder tetraalkylsubstituierte 4,4'-Diaminodiphenylmethane.

Weiterhin können in geringen Mengen auch übliche monofunktionelle Verbindungen eingesetzt werden, z.B. als Kettenabbrecher oder Entformungshilfen. Beispielhaft genannt seien Alkohole wie Oktanol und Stearylalkohol oder Amine wie Butylamin und Stearylamin.

Die erfindungsgemäßen TPU können nach den bekannten Band- oder Extruderverfahren hergestellt werden (GB-A 1,057,018 und DE-A 2,059,570). Bevorzugt ist das Verfahren nach PCT/EP 98/07753.

Vorzugsweise wird bei der kontinuierlichen Herstellung der thermoplastischen Polyurethane gemäß dem Extruder- oder Bandverfahren ein Katalysator eingesetzt. Geeignete Katalysatoren sind nach dem Stand der Technik bekannte und übliche tertiäre Amine, wie z.B. Triethylamin, Dimethylcyclohexylamin, N-Methylmorpholin, N,N'-Dimethyl-piperazin, 2-(Dimethylaminoethoxy)-ethanol, Diazabicyclo-[2,2,2]-octan und ähnliche sowie insbesondere organische Metallverbindungen wie Titansäureester, Eisenverbindungen, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Bevorzugte Katalysatoren sind organische Metallverbindungen, insbesondere Titansäureester, Eisen- oder Zinnverbindungen. Ganz besonders bevorzugt ist Dibutylzinndilaurat.

Neben den TPU-Komponenten und gegebenenfalls Katalysatoren können auch UV-Stabilisatoren, Hilfsmittel und Zusatzstoffe zugesetzt werden. Genannt seien beispielsweise Gleitmittel, wie Fettsäureester, deren Metallseifen, Fettsäureamide und Silikonverbindungen, Antiblockmittel, Inhibitoren, Stabilisatoren gegen Hydrolyse, Hitze und Verfärbung, Flammschutzmittel, Farbstoffe, Pigmente, anorganische und organische Füllstoffe und Verstärkungsmittel, die nach dem Stand der Technik hergestellt werden und auch mit einer Schlichte beaufschlagt sein können. Nähere Angaben über die genannten Hilfs- und Zusatzstoffe sind der Fachliteratur zu entnehmen, beispielsweise J.H. Saunders, K.C. Frisch: "High Polymers", Band XVI, Polyurethane, Teil 1 und 2, Interscience Publishers 1962 bzw. 1964, R. Gächter, H. Müller (Ed.): Taschenbuch der Kunststoff-Additive, 3. Ausgabe, Hanser Verlag, München 1989 oder DE-A-29 01 774.

Die Zugabe von Additiven kann nach der Polymerisation durch Compoundierung oder auch während der Polymerisation erfolgen. Während der Polymerisation können beispielsweise Antioxidationsmittel und UV-Stabilisatoren im Polyol gelöst werden. Es können aber auch Gleitmittel und Stabilisatoren beim Extruderverfahren beispielsweise im zweiten Teil der Schnecke zugegeben werden.

Die erfindungsgemäßen TPU können zur Herstellung von Formkörpern, insbesondere zur Herstellung von Extrudaten (z.B. Folien) und Spritzgießteilen eingesetzt werden. Des weiteren können die erfindungsgemäßen TPU als sinterfähiges Pulver zur Herstellung von Flächengebilden und Hohlkörpern verwendet werden.

Die Erfindung soll anhand der nachfolgenden Beispiele näher erläutert werden.

## Beispiele

### Herstellung der TPU und Spritzplatten

Die TPU wurden folgendermaßen kontinuierlich hergestellt:

Die Komponente B), die zusätzlich noch Hilfsmittel enthält (siehe Tabelle), Kettenverlängerer C) und Dibutylzinndilaurat wurden in einem Kessel unter Rühren auf ca. 110°C erhitzt und zusammen mit der Komponente A), welche mittels Wärmeaustauscher auf ca. 110°C erhitzt wurde, durch einen Statikmischer der Firma Sulzer (DN6 mit 10 Mischelementen und einer Scherrate von 500 s$^{-1}$) intensiv gemischt und dann in den Einzug einer Schnecke (ZSK 32) geführt. Das gesamte Gemisch reagierte auf dem Extruder bis zur vollständigen Umsetzung aus und wurde anschließend granuliert.

Das hergestellte Granulat wurde getrocknet und dann jeweils zu mehreren Spritzplatten verspritzt. Ein Teil der Spritzplatten wurde jeweils in einem Umlufttrockenschrank bei 60°C gelagert und auf Belagsbildung an der Oberfläche getestet. Ein anderer Teil der Spritzplatten wurde bei Raumtemperatur gelagert. Die Belagsbildung ist besonders gut an Fingerabdrücken, die sich auf dem Formkörper befinden, zu erkennen. Die Beurteilung der Proben erfolgte qualitativ, da eine Messmethode nicht bekannt ist.

## Testbedingungen

Aus den TPU wurden rechteckige Spritzplatten (125 mm x 50 mm x 2 mm) hergestellt.

Qualitative Beurteilung (Zunehmende Belagsbildung):

keine < sehr gering < gering < deutlich < stark < sehr stark

| | |
|---|---|
| DBTL | Dibutylzinndilaurat |
| DE2020 | Polycarbonatdiol auf 1,6-Hexandiol-Basis mit mittlerem Molekulargewicht $\overline{M}_n$ = 2000 g/mol |
| PE 225B | Polybutandioladipat mit mittlerem Molekulargewicht $\overline{M}_n$ = 2250 g/mol |
| Therathane 2000® | Polytetrahydrofurandiol mit $\overline{M}_n$ = 2000 g/mol (Firma Du Pont) |
| Therathane 1000® | Polytetrahydrofurandiol mit $\overline{M}_n$ = 1000 g/mol (Firma Du Pont) |
| Therathane 650® | Polytetrahydrofurandiol mit $\overline{M}_n$ = 650 g/mol (Firma Du Pont) |
| Therathane 250® | Polytetrahydrofurandiol mit $\overline{M}_n$ = 250 g/mol (Firma Du Pont) |
| Acclaim® 2220 | Polyetherpolyol mit Polyoxypropylen-Polyoxethyleneinheiten (mit ca. 85% primären Hydroxylgruppen und einem mittleren Molekulargewicht von $\overline{M}_n$ von ca. 2000 g/mol Fa. Lyondell) |
| HDI | Hexamethylendiisocyanat |
| Irganox® 1010 | Tetrakis[methylen-(3,5-di-tert-butyl-4-hydroxyhydrocinnamate)]methan (Fa. Ciba Geigy) |
| Stabaxol® P200 | Aromatisches Polycarbodiimid (Fa. Rhein-Chemie) |
| 1,4BDO | 1,4-Butandiol |
| 1,6 HDO | 1,6-Hexandiol |

## Zusammensetzung der TPU

| TPU | HDI Mole/g | | Polyol 1 Mole/g | | Polyol 2 Mole/g | | 1,4BDO Mole/g | 1,6HDO Mole/g |
|---|---|---|---|---|---|---|---|---|
| Vergleich 1[1] | 5,09 / 856 | | 1,0 / 2000 | DE 2020 | 0,43/ 967 | PE 225 B | 3,76 / 339 | - |
| Vergleich 2[1] | 5,09 / 856 | | 1,0 / 2000 | DE 2020 | 0,43/ 967 | PE 225 B | - | 3,76 / 445 |
| Vergleich 3[2] | 3,78/636 | | 1,0 / 2250 | PE 225B | - | - | - | 2,85/337 |
| Vergleich 4[2] | 5,39/908 | | 1,0 / 2250 | PE 225B | 0,43/ 964 | Acclaim 2220 | - | 4,08/482 |
| Vergleich 5[1] | 3,38/569 | | 1,0 / 2000 | Terathane 2000 | | | - | 2,45/290 |
| Beispiel 1[1] | 3,25/545 | | 1,0 / 1000 | Terathane 1000 | - | - | - | 2,31/273 |
| Beispiel 2[1] | 5,61/941 | | 1,0 / 1000 | Terathane 1000 | - | - | - | 4,72/557 |
| Beispiel 3[2] | 8,77/820 | | 1,0 / 1250 | PE 225 B | 2,25/1250 | Terathane 1000 | - | 5,71/375 |
| Beispiel 4[2] | 7,9/739 | | 1,0 / 1250 | PE 225 B | 2,31/833 | Terathane 650 | - | 4,76/312 |
| Beispiel 5[2] | 11,52/1077 | | 1,0 / 1250 | PE 225 B | 6,0/833 | Terathane 250 | - | 4,76/312 |

Alle TPU wurden unter Zugabe von 40 ppm DBTL, bezogen auf die eingesetzten Polyole hergestellt.

1) Diese TPU enthalten zusätzlich 0,5 Gew.-% Irganox 1010, bezogen auf TPU.

2) Diese TPU enthalten zusätzlich 0,5 Gew.-% Irganox 1010, bezogen auf TPU und 1 Gew.-% Stabaxol P 200, bezogen auf PE 225 B.

EP 1 149 851 B1

**Ergebnisse:**

| TPU | Belagsbildung bei einer Lagerung bei 60°C nach | | | |
|---|---|---|---|---|
| | 7 Tagen | 14 Tagen | 28 Tagen | 28 Tagen; mit trockenem Tuch abwischbar |
| Vergleich 1 | sehr stark | sehr stark | sehr stark | nein |
| Vergleich 2 | keine | keine | keine | - |
| Vergleich 3 | keine | keine | keine | - |
| Vergleich 4 | keine | keine | keine | - |
| Vergleich 5 | keine | keine | keine | - |
| Beispiel 1 | keine | keine | keine | - |
| Beispiel 2 | keine | keine | keine | - |
| Beispiel 3 | keine | keine | keine | - |
| Beispiel 4 | keine | keine | keine | - |
| Beispiel 5 | keine | keine | keine | - |

| TPU | Belagsbildung bei einer Lagerung bei Raumtemperatur (20-25°C) nach | | | |
|---|---|---|---|---|
| | 1 Monat | 2 Monaten | 3 Monaten | 3 Monaten: mit trockenem Tuch abwischbar |
| Vergleich 1 | sehr stark | sehr stark | sehr stark | nein |
| Vergleich 2 | stark | stark | stark | ja |
| Vergleich 3 | deutlich | stark | stark | ja |
| Vergleich 4 | deutlich | deutlich | deutlich | ja |
| Vergleich 5 | deutlich | deutlich | deutlich | ja |
| Beispiel 1 | keine | keine | keine | - |
| Beispiel 2 | keine | keine | keine | - |
| Beispiel 3 | keine | keine | sehr gering | ja |
| Beispiel 4 | keine | keine | sehr gering | ja |
| Beispiel 5 | keine | keine | sehr gering | ja |

**Patentansprüche**

1. Thermoplastische Polyurethane erhältlich aus

   A) 100 bis 60 Mol-% Hexamethylendiisocyanat (HDI) und 0 bis 40 Mol-% andere aliphatische Diisocyanate,

   B) 30 bis 100 Gew.-% Polytetramethylenglykol mit einem zahlenmittleren Molekulargewicht von 600 bis 1600 g/mol oder von 200 bis 590 g/mol (B1) und 0 bis 70 Gew.-% eines von (B1) verschiedenen Polyols oder Polyolgemisches mit einem zahlenmittleren Molekulargewicht von 600 bis 5000 g/Mol (B2) und

   C) 80 bis 100 Gew.-% 1,6-Hexandiol (C1) und 0 bis 20 Gew.-% eines von (C1) verschiedenen Kettenverlängerers mit einem zahlenmittleren Molekulargewicht von 60 bis 500 g/Mol (C2),
   unter Zusatz von

   D) gegebenenfalls Katalysatoren und

   E) gegebenenfalls üblichen Hilfsmitteln und Zusatzstoffen,

   wobei das Äquivalenzverhältnis von Diisocyanat A) zu Polyol B) zwischen 1,5:1,0 und 10,0:1,0 beträgt und wobei die NCO-Kennzahl 95 bis 105 beträgt,
   und wobei bei einem zahlenmittleren Molekulargewicht von (B1) von 600 bis 1600 g/mol (B1) in einer Menge von 40 bis 100 Gew.-% und (B2) in einer Menge von 0 bis 60 Gew.-% vorhanden sind und bei einem zahlenmittleren Molekulargewicht von (B1) von 200 bis 590 g/mol (B1) in einer Menge von 30 bis 70 Gew.-% und (B2) in einer Menge von 70 bis 30 Gew.-% vorhanden sind, wobei (C1) und (C2) unterschiedlich zu (B1) sind.

2. Verwendung der thermoplastischen Polyurethane gemäß Anspruch 1 zur Herstellung von Formkörpern.

3. Verwendung der thermoplastischen Polyurethane gemäß Anspruch 1 zur Herstellung von Extrudaten und Spritzgießteilen.

4. Verwendung der thermoplastischen Polyurethane gemäß Anspruch 1 als sinterfähiges Pulver zur Herstellung von Flächengebilden und Hohlkörpern.

5. Formkörper erhältlich aus einem thermoplastischen Polyurethan gemäß Anspruch 1.


**Claims**

1. Thermoplastic polyurethanes obtainable from

   A) 100 to 60 mol% of hexamethylene diisocyanate (HDI) and 0 to 40 mol% of other aliphatic diisocyanates,

   B) 30 to 100 wt.% of polytetramethylene glycol having a number average molecular weight of 600 to 1600 g/mol or of 200 to 590 g/mol (B1) and 0 to 70 wt.% of a polyol or polyol mixture (B2) differing from (B1) and having a number average molecular weight of 600 to 5000 g/mol and

   C) 80 to 100 wt.% of 1,6-hexanediol (C1) and 0 to 20 wt.% of a chain extender differing from (C1) and having a number average molecular weight of 60 to 500 g/mol (C2),
   with the addition of

   D) optionally catalysts and

   E) optionally conventional auxiliary substances and additives,

   wherein the equivalence ratio of diisocyanate A) to polyol B) is between 1.5:1.0 and 10.0:1.0 and wherein the NCO index is 95 to 105,
   and wherein, in the case of a number average molecular weight of (B1) of 600 to 1600 g/mol, (B1) is present in a quantity of 40 to 100 wt.% and (B2) is present in a quantity of 0 to 60 wt.% and, in the case of a number average molecular weight of (B1) of 200 to 590 g/mol, (B1) is present in a quantity of 30 to 70 wt.% and (B2) is present in quantity of 70 to 30 wt.%, wherein (C1) and (C2) differ from (B1).

2. Use of the thermoplastic polyurethanes according to claim 1 for the production of mouldings.

3. Use of the thermoplastic polyurethanes according to claim 1 for the production of extrudates and injection moulded articles.

4. Use of the thermoplastic polyurethanes according to claim 1 as a sinterable powder for the production of sheet products and hollow articles.

5. Mouldings obtainable from a thermoplastic polyurethane according to claim 1.

**Revendications**

1. Polyuréthanne thermoplastique pouvant être obtenu à partir de

    A) 100 à 60 % en moles de diisocyanate d'hexaméthylène et 0 à 40 % en moles d'autres diisocyanates aliphatiques,

    B) 30 à 100 % en poids de polytétraméthylène glycol d'un poids moléculaire moyen en nombre de 600 à 1600 g/mole ou de 200 à 590 g/mole (B1) et 0 à 70 % en poids d'un polyol ou mélange de polyols différent de (B1) d'un poids moléculaire moyen en nombre de 600 à 5000 g/mole (B2) et

    C) 80 à 100 % en poids de 1,6-hexanediol (C1) et 0 à 20 % en poids d'un prolongateur de chaîne différent de (C1) d'un poids moléculaire moyen en nombre de 60 à 500 g/mole (C2),
        avec addition

    D) le cas échéant de catalyseurs et

    E) le cas échéant d'agents auxiliaires et additifs habituels,

    le rapport d'équivalence du diisocyanate A) sur le polyol B) étant compris entre 1,5:1,0 et 10,0:1,0 et le coefficient NCO étant de 95 à 105,
        et, pour un poids moléculaire moyen en nombre de (B1) de 600 à 1600 g/mole, (B1) étant présent dans une quantité de 40 à 100 % en poids et (B2) dans une quantité de 0 à 60 % en poids et, pour un poids moléculaire moyen en nombre de (B1) de 200 à 590 g/mole, (B1) étant présent dans une quantité de 30 à 70 % en poids et (B2) dans une quantité de 70 à 30 % en poids, (C1) et (C2) étant différents de (B1).

2. Utilisation des matières à mouler thermoplastiques suivant la revendication 1 pour la fabrication de pièces moulées.

3. Utilisation des matières à mouler thermoplastiques suivant la revendication 1 pour la fabrication de produits d'extrusion et de pièces moulées par injection.

4. Utilisation des matières à mouler thermoplastiques suivant la revendication 1 comme poudre frittable pour la fabrication de produits plats et de corps creux.

5. Corps moulé pouvant être obtenu à partir d'un polyuréthanne thermoplastique suivant la revendication 1.